# EUROPÄISCHE PATENTSCHRIFT

(11) **EP 1 528 328 B1**
(45) Veröffentlichungstag und Bekanntmachung des Hinweises auf die Patenterteilung: **25.04.2012**
(21) Anmeldenummer: 03025081.5
(22) Anmeldetag: 03.11.2003
(51) Int. Cl.: F24D 3/08, F24H 9/14, F24H 1/52

(54) **Baueinheit für eine Kompaktheizungsanlage**
Assembly for a compact heating installation
Module pour installation de chauffage compacte

(43) Veröffentlichungstag der Anmeldung: 04.05.2005
(60) Teilanmeldung: 07023409.1
(73) Patentinhaber: GRUNDFOS A/S, DK-8850 Bjerringbro (DK)
(72) Erfinder: Finn, Mathiesen Hoj, 8200 Aarhuis N (DK)
(74) Vertreter: Hemmer, Arnd

(56) Entgegenhaltungen:
- EP-A- 0 635 682
- EP-A- 0 784 191
- GB-A- 2 262 593

## Beschreibung

Die Erfindung betrifft eine Baueinheit für eine Kompaktheizungsanlage, insbesondere für eine Gastherme, mit zwei Heizkreisen, einen für die Raumheizung und einen für die Brauchwassererwärmung, gemäß Oberbegriff von Anspruch 1. Eine derartige Baueinheit ist aus DE-A-10007873 bekannt.

Derartige Kompaktheizungsanlagen, insbesondere Gasthermen, dienen zur Erwärmung von Heizungswasser für die Raumheizung und gleichzeitig zur Erwärmung von Brauchwasser. Die Kompaktheizungsanlagen weisen verschiedene Bauteile, insbesondere Wärmetauscher zur Erwärmung des Wassers im Primärkreislauf der Heizungsanlage sowie des Brauchwassers auf. Dabei sind im Primärkreislauf üblicherweise eine Umwälzpumpe sowie ein Umschaltventil zum Umschalten von Raumheizung und Brauchwassererwärmung angeordnet. Darüber hinaus sind weitere Bauteile wie Sicherheitsventile, Befüllanschlüsse, etc. vorgesehen, wobei Ausführungen bekannt sind, bei welcher Pumpe und Umschaltventil in einem Bauteil zusammengefasst sind.

Bei der Brauchwassererwärmung besteht generell das Problem, dass bei der Brauchwasserentnahme eine gewisse Zeit verstreicht, bis der Heizkessel die erforderliche Betriebstemperatur erreicht hat und über einen Primärkreislauf und einen Sekundärwärmetauscher das Brauchwasser ausreichend erwärmt wird. Um diesen Nachteil auszugleichen, sind Anlagen bekannt, bei welchen ein Brauchwasserspeicher vorgesehen ist, in dem erwärmtes Brauchwasser gespeichert wird. Die Speicherung von erwärmtem Brauchwasser birgt jedoch stets die Gefahr einer Verkeimung des Wassers.

GB 2 262 593 A offenbart eine Kompaktheizungsanlage, bei welcher im Sekundärkreislauf zur Erwärmung des Brauchwassers ein Wasserspeicher vorgesehen ist, welcher erwärmtes Wasser des Sekundärkreislaufes speichert, um über einen Sekundärwärmetauscher das Brauchwasser bei Inbetriebnahme der Anlage schneller erwärmen zu können. Erforderliche Bypassleitungen und Ventile sowie der Sekundärwärmetauscher sind bei dieser Anlage direkt in einem Gehäuse am unteren Ende des Wärmespeichers angeordnet. Es sind Anschlüsse für die Brauchwasserzu- und abfuhr sowie zur Verbindung mit dem Heizkreislauf der Kompaktheizungsanlage vorgesehen. Über diese Anschlüsse wird die Wärmespeichereinheit mit dem Primärkreislauf mit einem Umschaltventil zum Umschalten zwischen Raumheizung und Brauchwassererwärmung sowie einer Umwälzpumpe und einem Primärwärmetauscher verbunden. Die Verbindung mit diesen Bauteilen erfordert eine zusätzliche Verrohrung im Inneren der Kompaktheizungsanlage.

EP 0 635 682 A1 sowie EP 0 784 191 A2 offenbarten weitere Kompaktheizungsanlagen, bei welchen Wörmespeicher im Sekundärkreislauf zur Brauchwassererwärmung vorgesehen sind. Auch bei diesen Kompaktheizungsanlagen müssen sämtliche Bauteile durch Rohrleitungen umständlich miteinander verbunden werden.

Es ist Aufgabe der Erfindung, den Aufbau einer Kompaktheizungsanlage mit zwei Heizkreisen dahingehend zu verbessern, dass der Aufbau und die Montage der Kompaktheizungsanlage vereinfacht werden.

Diese Aufgabe wird durch eine Baueinheit für eine Kompaktheizungsanlage mit den im Anspruch 1 angegebenen Merkmalen gelöst. Bevorzugte Ausführungsformen ergeben sich aus den Unteransprüchen.

Eine solche Baueinheit bildet einen integrierten Wasserkreislauf, welcher insbesondere die Anschlüsse für den Raumheizungskreislauf sowie die Brauchwasserzu- und -abfuhr, erforderliche Ventile sowie eine Umwälzpumpe enthält.

Die erfindungsgemäße Baueinheit ist vorgesehen für eine Kompaktheizungsanlage, insbesondere eine Gastherme, welche zwei Heizkreise aufweist, nämlich einen für die Raumheizung und einen für die Brauchwassererwärmung. In der Baueinheit ist zumindest ein Leitungsabschnitt eines Primärkreislaufes, durch den das Wasser für die Raumheizung fließt, vorgesehen. Das Fluid bzw. Wasser im Primärkreislauf wird durch einen im Heizungskessel angeordneten Primärwärmetauscher erwärmt. In der Baueinheit ist eine Pumpe zur Umwälzung des Primärkreislaufes bzw. Raumheizungskreislaufes angeordnet. Das Brauchwasser wird in einem Sekundärwärmetauscher erwärmt, durch welchen das erwärmte Wasser des Primärkreislaufes geleitet wird. Darüber hinaus können in der Baueinheit in bekannter Weise weitere Anschlüsse, Armaturen und Bauteile zu einem integrierten Wasserkreislauf zusammengefasst sein. Erfindungsgemäß weist die Baueinheit darüber hinaus in zumindest einem Leitungsabschnitt des Primärkreislaufe Anschlüsse für einen Wasserspeicher zum Speichern erwärmten Heizungswassers auf. Die Anordnung eines solchen Wasserspeichers im Primärkreislauf hat den Vorteil, dass dort immer erwärmtes Heizungswasser vorgehalten werden kann, welches bei Anforderung von erwärmten Brauchwasser dem Sekundärwärmetauscher zugeführt wird, um dort das Brauchwasser zu erwärmen, bevor durch den Primärwärmetauscher bei Start des Heizkessels das Wasser des Primärkreislaufes erwärmt wird. So kann eine schnelle Erwärmung des Brauchwassers sichergestellt werden, ohne bereits erwärmtes Brauchwasser speichern zu müssen. So wird die Gefahr der Verkeimung des Brauchwassers insbesondere im Hinblick auf die gefährliche Legionärskrankheit beseitigt. Dadurch, dass die Anschlüsse für den Wasserspeicher in die Baueinheit integriert sind, wird der Aufbau und die Montage der gesamten Kompaktheizungsanlage deutlich vereinfacht. So können alle wesentlichen Anschlüsse, Armaturen und Komponenten in der Baueinheit integriert werden, welche dann als Ganzes in die Kompaktheizungsanlage eingebaut werden kann und dort im Wesentlichen nur noch mit dem Primärwärmetauscher im Heizungskessel verbunden werden muss. Für den Einbau des Wasserspeichers müssen keine separaten Anschlüsse oder Verzweigungen in Rohrleitungen vorgesehen werden, da diese Anschlüsse neben anderen Anschlüssen, beispielsweise für die Brauchwasserzu- und -abfuhr, den Raumheizungskreislauf, etc., in die Baueinheit integriert sind. Auf diese Weise wird die Verrohrung im Inneren der Kompaktheizungsanlage deutlich vereinfacht, da sie durch Integration in die Baueinheit weitgehend überflüssig wird.

Vorzugsweise sind die Anschlüsse für den Wasserspeicher in dem Primärkreislauf in Strömungsrichtung hinter einem Primärwärmetauscher angeordnet. So wird das gerade von dem Primärwärmetauscher erwärmte Wasser mit möglichst hoher Temperatur in dem Wasserspeicher gespeichert. Je nach Platzverhältnissen kann der Wasserspeicher jedoch auch an anderer Stelle in den Primärkreislauf integriert werden, wobei hier möglicherweise geringe Wärmeverluste in Kauf genommen werden können. Aufgrund der geringen Fluidmengen in dem Primärkreislauf sind derartige Wärmeverluste meist gering.

Weiter bevorzugt sind die Anschlüsse für den Wasserspeicher in dem Primärkreislauf in Strömungsrichtung vor einem Sekundärwärmetauschers zur Erwärmung des Brauchwassers angeordnet. Diese Anordnung hat den Vorteil, dass bei Anforderung von erwärmten Brauchwasser, wenn die Umwälzpumpe in dem Primärkreislauf gestartet wird, aus dem Wasserspeicher warmes Heizungswasser direkt in den Sekundärwärmetauscher geleitet wird, um dort das Brauchwasser zu erwärmen. Auf diese Weise wird sichergestellt, dass der Erwärmungsvorgang des Brauchwassers in dem Sekundärwärmetauscher möglichst direkt bei Anforderung von warmem Brauchwasser, gestartet wird. Der Wasserspeicher ist bevorzugt so in den Primärkreislauf integriert, dass das Wasser des Primärkreislaufes durch den Wasserspeicher fliest, sodass dieser bei Heizung des Primärkreislaufes durch den Primärwärmetauscher ständig mit erwärmtem Heizungswasser gefüllt wird. Bei der Brauchwassererwärmung wird möglichst direkt die Umwälzpumpe in Betrieb genommen und durch Umwälzung des Primärkreislaufes das in dem Wasserspeicher gespeicherte Heizungswasser dem Sekundärwärmetauscher zugeführt. Auf diese Weise kann die Zeitspanne bis zum Erreichen der erforderlichen Kesseltemperatur nach Starten des Brenners überbrückt werden und möglichst schnell erwärmtes Brauchwasser bereitgestellt werden.

Gemäß einer besonders bevorzugten Ausführungsform sind die Anschlüsse verschließbar oder geschlossen ausgebildet. Diese Ausgestaltung hat den Vorteil, dass dieselbe Baueinheit sowohl für Kompaktheizungsanlagen mit Wasserspeicher als auch für Kompaktheizungsanlagen ohne Wasserspeicher verwendet werden kann. Auf diese Weise wird die Teilevielfalt, welche erforderlich ist, um unterschiedlich konfigurierte Kompaktheizungsanlagen herstellen zu können, verringert. So können einfache Heizungsmodelle beispielsweise ohne Wasserspeicher bzw. Komfortbehälter ausgestattet werden und aufwendigere Modelle mit Wasserspeicher ausgestattet werden. Ferner besteht bei Verwendung derselben Baueinheit die Möglichkeit, einen derartigen Wasserspeicher später leicht nachrüsten zu können. Die Anschlüsse können beispielsweise durch Kappen oder Stopfen verschlossen werden. Darüber hinaus besteht die Möglichkeit, dass bei der als Kunststoffspritzgussteil gefertigten Baueinheit die ausgebildeten Anschlüsse bzw. Anschlussstutzen durch Verwendung von anderen z. B. kürzeren Kernen beim Spritzgießen geschlossen ausgebildet werden. Die Öffnungen müssen dann nicht in einem weiteren Arbeitsgang verschlossen werden, können aber vorzugsweise bei Bedarf geöffnet werden. Dazu können Sollbruchstellen ausgebildet werden, um die Verschlüsse der Öffnungen aufbrechen bzw. durchstoßen zu können. Die Ausbildung von Baueinheiten mit geöffneten und geschlossenen Anschlüssen für eine Wasserspeicher im Spritzgussverfahren mittels geänderter Kerne hat den Vorteil, dass im Übrigen das Werkzeug für die Baueinheit identisch ist, sodass nicht zwei verschiedene Werkzeuge hergestellt werden müssen, um eine Baueinheit mit Anschlüssen für einen Wasserspeicher und eine Baueinheit ohne Anschlüsse für einen Wasserspeicher fertigen zu können.

Die Anschlüsse für den Wasserspeicher sind vorzugsweise in einem zur Aufnahme eines Schmutzabscheiders ausgebildeten Leitungsabschnitt angeordnet. Dies ermöglicht einen kompakten Aufbau der Baueinheit, da die erforderlichen Anschlüsse auf kleinem Raum zusammengefasst werden können.

Weiter bevorzugt ist im Inneren des Leitungsabschnittes zwischen den Anschlüssen für den Wasserspeicher ein Sperrelement zum Verschließen bzw. Unterbrechen des Strömungsweges in dem Leitungsabschnitt einsetzbar oder eingesetzt. Wenn der Wasserspeicher mittels zweier Anschlüsse an einem Leitungsabschnitt angeschlossen ist, ist es erforderlich, den Strömungsweg in dem Leitungsabschnitt zwischen den Anschlüssen zu verschließen bzw. zu unterbrechen, um sicherzustellen, dass der Primärkreislauf durch den Wasserspeicher geführt wird. Das dazu erforderliche Sperrelement kann einstückig mit dem Leitungsabschnitt in der Baueinheit vorzugsweise im Spritzguss gefertigt werden. Alternativ kann das Sperrelement als separates Bauteil in den Leitungsabschnitt einsetzbar sein. Dies ist insbesondere dann von Vorteil, wenn ein und dieselbe Baueinheit sowohl mit Wasserspeicher als auch ohne Wasserspeicher eingesetzt werden kann. Wenn kein Wasserspeicher vorgesehen ist, werden dann die Anschlüsse für den Wasserspeicher verschlossen bzw. nicht geöffnet und kein Sperrelement in den Leitungsabschnitt eingesetzt. Zum Anschluss des Wasserspeichers werden die Anschlüsse geöffnet und ein Sperrelement eingesetzt. Die Anordnung eines Sperrelementes im Inneren des Leitungsabschnittes hat ferner den Vorteil, dass lediglich eine interne Dichtung gebildet wird, an welche geringere Anforderungen bezüglich der Dichtigkeit gestellt werden. So können im Bereich des Sperrelementes geringe Leckagen toleriert werden, da diese die Gesamtfunktion des Primärkreislaufes und des Wasserspeichers nicht beeinträchtigen, solange der Hauptteil des Primärkreislaufes durch den Wasser- bzw. Wärmespeicher geführt wird. Es muss keine hundertprozentige Dichtigkeit wie bei einer nach außen wirkenden Dichtung sichergestellt werden.

Besonders bevorzugt weist der Leitungsabschnitt eine Öffnung zum Einsetzen des Schmutzabscheiders auf und das Sperrelement zum Verschließen des Leitungsabschnittes ist durch diese Öffnung in den Leitungsabschnitt einsetzbar oder eingesetzt. Dies vereinfacht den Aufbau und die Montage der Baueinheit weiter, da hier ein und dieselbe Öffnung, nämlich die zum Einsetzen und Entnehmen des Schmutzabscheiders, für mehrere Zwecke, nämlich zusätzlich zum Einsetzen des Sperrelementes genutzt werden kann. So kann das Sperrelement leicht in den Leitungsabschnitt mit den Anschlüssen für den Wasserspeicher eingesetzt werden, ohne dass eine zusätzliche Öffnung oder Ausnehmung in dem Leitungsabschnitt vorgesehen werden muss. Darüber hinaus weist die Öffnung zum Einsetzen und Entnehmen des Schmutzabscheiders meist eine derartige Größe auf, dass eine leichte Montage des Sperrelementes möglich ist.

Das Sperrelement ist bevorzugt als Trennwand, vorzugsweise aus Metall ausgebildet, welche in den Leitungsabschnitt eingepresst ist. Eine solche Trennwand aus Metall ist kostengünstig herzustellen und leicht ohne zusätzliche Dichtelemente in dem Leitungsabschnitt zu montieren. Vorzugsweise ist die Trennwand aus Metall, um eine ausreichende Festigkeit welche für das Einpressen erforderlich ist, sicherzustellen. Alternativ kann die Trennwand jedoch auch aus Kunststoff gefertigt werden.

Die Anschlüsse für den Wasserspeicher sind vorzugsweise nebeneinander liegend in dem Leitungsabschnitt angeordnet. Dies ermöglicht eine leichte Montage des Wasserspeichers, da dessen Anschlüsse somit nebeneinander liegend, vorzugsweise parallel zueinander zu der Baueinheit geführt werden können, ohne dass zusätzliche Winkelstücke oder längere Rohrleitungen erforderlich sind. Somit kann ein kompakter Aufbau der gesamten Heizungsanlage geschaffen werden. Ferner ist der Leitungsabschnitt, in dem die Anschlüsse vorgesehen sind, sehr kurz und es kann leicht die erforderliche Trennwand zum Unterbrechen des Leitungsabschnittes zwischen den Anschlüssen angeordnet werden.

Weiter bevorzugt sind die Anschlüsse für den Wasserspeicher im Primärkreislauf an der Saugseite der Pumpe angeordnet. Dies ist insbesondere bei Anordnung der Anschlüsse in einem Leitungsabschnitt, in welchem ein Schmutzabscheider eingesetzt wird, zweckmäßig, da der Schmutzabscheider an der Saugseite der Pumpe vorgesehen ist, um eventuelle Partikel im Rückfluss des Heizungswassers abzuscheiden und somit die Pumpe vor Beschädigungen zu schützen.

Nachfolgend wird die Erfindung beispielhaft anhand der beigefügten Figuren beschrieben. In diesen zeigt:
- Fig. 1: schematisch den Aufbau einer Kompaktheizungsanlage mit der erfindungsgemäßen Baueinheit,
- Fig. 2: eine perspektivische Gesamteinsicht einer bevorzugten Ausführungsform der erfindungsgemäßen Baueinheit,
- Fig. 3: eine perspektivische Ansicht eines Bauteils der erfindungsgemäßen Baueinheit gemäß Fig. 2 mit den Anschlüssen für den Wärmespeicher,
- Fig. 4: eine teilweise geschnittenen Ansicht des Bauteils gemäß Fig. 3,
- Fig. 5: eine teilweise geschnittene Ansicht des Bauteils gemäß Fig. 3 und 4, und
- Fig. 6: einen Längsschnitt des Bauteils gemäß Fig. 3 bis 5.

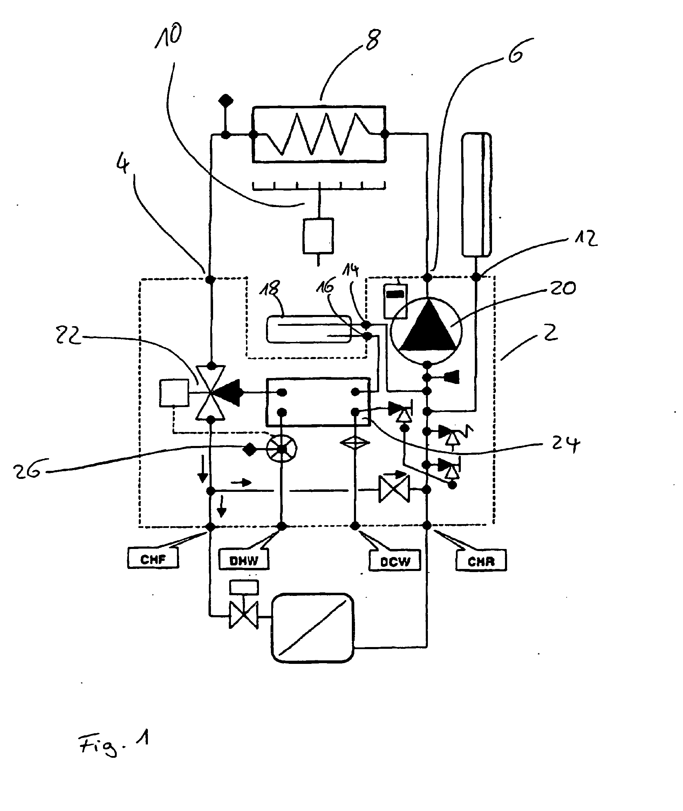

Figur 1 zeigt in einer schematischen Darstellung den Aufbau einer Kompaktheizungsanlage mit der erfindungsgemäßen Baueinheit 2, deren Komponenten in Figur 1 durch gestrichelte Linien umgrenzt sind. Alle im Inneren der gestrichelten Umgrenzung angeordneten Bauteile sind in die Baueinheit integriert. Die Baueinheit weist im Wesentlichen neun Anschlüsse zur Verbindung mit externen Rohrleitungen bzw. Komponenten auf. Dies sind die Anschlüsse CHF und CHR für den Raumheizungskreislauf, der Anschluss DCW für die Zufuhr von kaltem Brauchwasser und der Anschluss DHW für das erwärmte Brauchwasser. Darüber hinaus weist die Baueinheit Anschlüsse 4 und 6 zum Anschluss des Primärwärmetauschers 8 in dem Heizungskessel auf. In dem Primärwärmetauscher 8 wird über einen Brenner 10, vorzugsweise einen Gasbrenner, das Wasser im Primärkreislauf erhitzt. Ferner sind an der Baueinheit 2 ein Anschluss 12 für ein Ausgleichsgefäß und zwei Anschlüsse 14 und 16 zum Anschluss eines Wasserspeichers 18 zum Speichern von erwärmtem Wasser im Primärkreislauf vorgesehen.

In der Baueinheit 2 sind in bekannter Weise als wesentliche Komponenten eine Pumpe 20, ein 2/3-Wege-Ventil 22 sowie ein Sekundärwärmetauscher 24 angeordnet. Im Primärkreislauf strömt das Fluid bzw. Wasser, welches von der Pumpe 20 gefördert wird, von der Pumpe 20 durch den Anschluss 6 zu dem Primärwärmetauscher und über den Anschluss 4 zurück in die Baueinheit 2. Dort erreicht es das 2/3-Wege-Ventil, welches den Primärkreislauf zwischen dem Sekundärwärmetauscher 24 und dem Anschluss CHF für die Raumheizung umschalten kann. Wenn das 2/3-Wege-Ventil 22 auf Raumheizung geschaltet ist, fließt das Wasser über den Anschluss CHF durch die Heizkörper in den zu heizenden Räumen zurück zu dem Anschluss CHR an der Baueinheit 2 und in dieser wieder zur Saugseite der Pumpe 20. Wenn das 2/3-Wege-Ventil 22 zur Brauchwassererwärmung umgeschaltet wird, strömt das Wasser im Primärkreislauf vom 2/3-Wege-Ventil durch den vorzugsweise als Plattenwärmetauscher ausgebildeten Sekundärwärmetauscher 24 und von dort über den Anschluss 16 durch den Wasserspeicher 18 und über den Anschluss 14 zurück in die Baueinheit und in dieser zur Saugseite der Pumpe 20. Gleichzeitig wird über die Anschlüsse DHW und DCW das zu erwärmende Brauchwasser durch den Sekundärwärmetauscher 24 geleitet und dort über den Primärkreislauf erwärmt.

In dem Wasserspeicher 18, welcher als isolierter Tank ausgebildet ist, wird eine bestimmte Menge des erwärmten Fluids bzw. Wassers des Primärkreislaufes zwischengespeichert, um eine schnellere Brauchwassererwärmung zu ermöglichen. Dazu wird bei Betrieb der Kompaktheizungsanlage in Zeitabständen das 2/3-Wege-Ventil auf Brauchwassererwärmung umgeschaltet, auch wenn kein Brauchwasser entnommen wir. Auf diese Weise wird durch den Primärwärmetauscher 8 erwärmtes Wasser dem Wasserspeicher 18 zugeführt und dort gespeichert. Dieser Vorgang kann beispielsweise über einen in dem Wasserspeicher 18 vorgesehenen Temperatursensor gestartet werden. Wenn nun Brauchwasser entnommen wird, wird dieses über einen Strömungssensor 26 erfasst. Dies veranlasst die Steuerung der Heizungsanlage das 2/3-Wege-Ventil auf Brauchwassererwärmung umzuschalten und den Brenner 10 in dem Kessel zu starten, um dass Wasser des Primärkreislaufes zu erwärmen und dann über den Sekundärwärmetauscher 24 wie beschrieben das Brauchwasser zu erwärmen. Gleich nach Erfassung der Brauchwasserentnahme über den Strömungsmesser 26 wird gemeinsam mit dem Umschalten des 2/3-Wege-Ventils 22 auf Brauchwassererwärmung auch die Pumpe 20 in Betrieb gesetzt, sodass das in dem Wasserspeicher 18 gespeicherte warme Heizungswasser von der Pumpe 20 durch den Primärwärmetauscher 8 und das 2/3-Wege-Ventil 22 dem Sekundärwärmetauscher 24 zugeführt wird. So kann in dem Sekundärwärmetauscher 24 bereits Brauchwasser erwärmt werden, bevor der Heizkessel mit dem Brenner 10 seine Betriebstemperatur zum Aufheizen des Primärkreislaufes über den Primärwärmetauscher 8 erreicht.

Im gezeigten Beispiel sind die Anschlüsse 14 und 16 für den Wasserspeicher 18 zwischen der Ausgangseite des Sekundärwärmetauschers 24 und der Saugseite der Pumpe 20 im Primärkreislauf vorgesehen. Diese Anordnung ist nicht zwingend notwendig, vielmehr können die Anschlüsse 14 und 16 auch an anderer Stelle im Primärkreislauf angeordnet werden, beispielsweise zwischen der Druckseite der Pumpe 20 und dem Primärwärmetauscher 8, das heißt zwischen der Pumpe 20 und dem Anschluss 6. Alternativ ist eine Anordnung zwischen dem Anschluss 4 und dem 2/3-Wege-Ventil 22 oder zwischen dem 2/3-Wege-Ventil und dem Sekundärwärmetauscher 24 möglich. Besonders bevorzugt sind dabei die gezeigte Anordnung sowie die Anordnung zwischen 2/3-Wege-Ventil und Sekundärwärmetauscher 24, da bei diesen Anordnungen der Wasserspeicher 18 nicht in dem Teil des Primärkreislaufes liegt, welcher beim Betrieb der Raumheizung durchströmt wird. Besonders ist die Anordnung der Anschlüsse für den Wasserspeicher 18 zwischen 2/3-Wege-Ventil 22 und Eingangsseite des Sekundärwärmetauschers 24, da so das in dem Wasser- bzw. Wärmespeicher 18 gespeicherte warme Wasser unmittelbar dem Sekundärwärmetauscher 24 zugeführt werden kann, um dort Brauchwasser zu erwärmen.

Die übrigen Bauteile der Baueinheit 2, insbesondere Überdruck- und Füllventile, Bypassleitung, etc. entsprechen den Anordnungen bekannter Baueinheiten für Kompaktheizungsanlagen, weshalb an dieser Stelle auf eine nähere Erläuterung verzichtet wird.

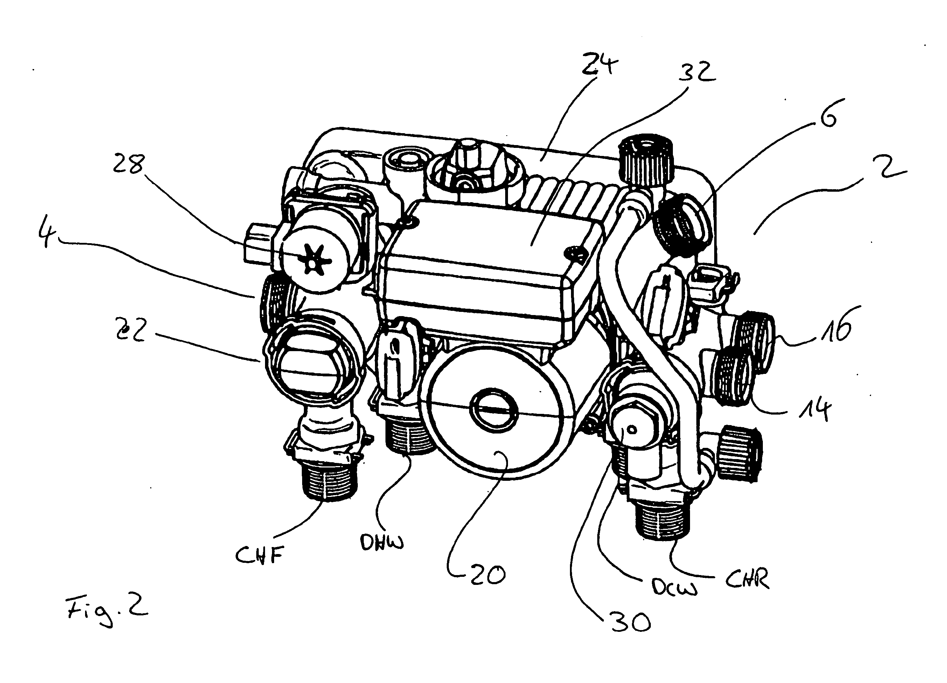

Die konstruktive Ausgestaltung der erfindungsgemäßen Baueinheit wird beispielhaft anhand der Figuren 2 bis 6 beschrieben. Figur 2 zeigt eine perspektivische Gesamtansicht der erfindungsgemäßen Baueinheit. Zentral angeordnet ist die Pumpe 20. An einer Seite der Pumpe 20, in Figur 2 links, ist das 2/3-Wege-Ventil 22 angeordnet, welches über einen Stellmotor 28 betätigt wird. An der entgegengesetzten Seite der Pumpe 20, das heißt in Figur 2 rechts, ist ein Leitungsabschnitt mit einer Aufnahme 30 für einen Schmutzabscheider ausgebildet. An der Unterseite der Baueinheit 2 sind die Anschlüsse CHF, CHR, DHW und DCW zum Anschluss des Heizungskreislaufs bzw. der Brauchwasserleitungen an die Kompaktheizungsanlage ausgebildet. Zentral oberhalb der Pumpe 20 ist ein Klemmenkasten 32 zum Anschluss der Pumpe und zur Aufnahme von Elektronikkomponenten angeordnet. Rückseitig ist an der Baueinheit 2 der Sekundärwärmetauscher 24 in Form eines Plattenwärmetauschers angebracht. Seitlich am Zwei/Drei-Wege-Ventil 22 ist der Anschluss 4 und an der Druckseite der Pumpe 20 der Anschluss 6 zur Verbindung mit dem Primärwärmetauscher 8 (hier nicht gezeigt) ausgebildet. Wie bereits anhand von Figur 1 erläutert, beinhaltet die Baueinheit alle Leitungsabschnitte bzw. Komponenten der Fluidkreisläufe zwischen dem extern angeschlossenen Primärwärmetauscher 8 sowie den Anschlüssen CHF, CHR, DHW und DCW für den Raumheizungskreislauf und die Brauchwasserversorgung.

In der Ausführungsform gemäß Figur 2 sind in dem Aufnahmegehäuse 30 für den Schmutzabscheider die Anschlüsse 14 und 16 für einen Wasserspeicher zur Speicherung erwärmten Wassers des Primärkreislaufes angeordnet. Die Anschlüsse 14 und 16 sind als Anschlussstutzen mit Gewinde einstückig mit dem Anschlussgehäuse 30 ausgebildet. Vorzugsweise ist die gesamte Baueinheit 2 einstückig als Spritzgussteil ausgebildet. Alternativ kann die Baueinheit aus einzelnen Gehäusekomponenten zusammengesetzt sein. So können der Gehäuseteil mit dem Aufnahmegehäuse 30, der Gehäuseteil zur Aufnahme der Pumpe 20 sowie der Gehäuseteil zur Aufnahme des 2/3-Wege-Ventils als separate Bauteile im Spritzguss gefertigt werden und anschließend zu der Baueinheit 2 zusammengesetzt werden.

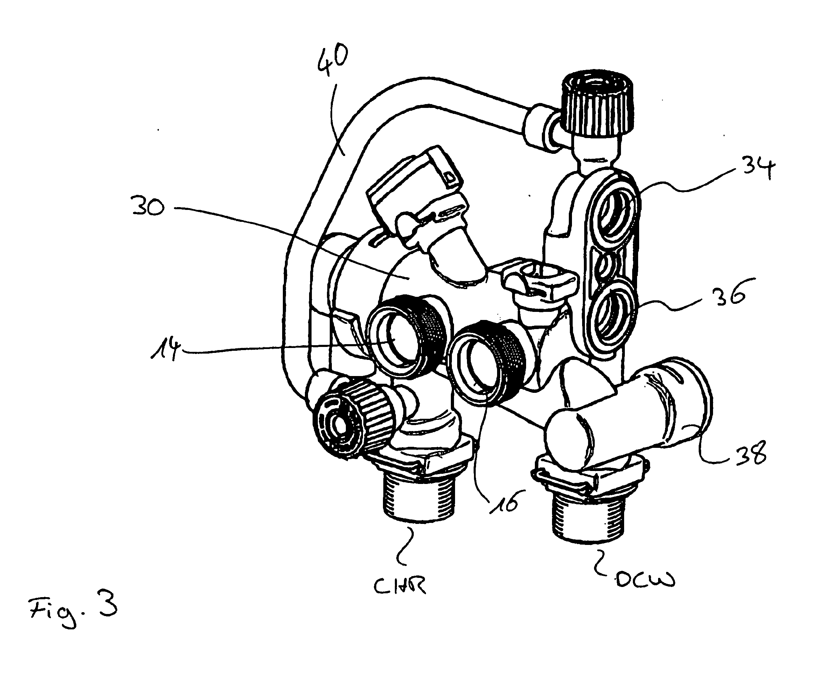

Figur 3 zeigt eine perspektivische Ansicht des Teils der Baueinheit 2, in welchem das Aufnahmegehäuse 30 für den Schmutzabscheider ausgebildet ist. An der Unterseite des Aufnahmegehäuses 30 sind die Anschlüsse CHR und DCW ausgebildet. Der Anschluss CHR bildet den Rücklauf des Raumheizungskreislaufes, durch welchen das Wasser des Primärkreislaufes, welches durch die Heizkörper in den zu beheizenden Räumen geflossen ist, dem in dem Gehäuse 30 angeordneten Schmutzabscheider zugeführt wird. Der Anschluss DCW dient der Zuleitung von zu erwärmendem Brauchwasser zu dem Sekundärwärmetauscher 24. Der Sekundärwärmetauscher 24 wird an die Öffnungen 34 und 36 angesetzt, wobei die Öffnung 34 über einen Leitungsabschnitt direkt mit dem Anschluss DCW verbunden ist, um zu erwärmendes Brauchwasser dem Sekundärwärmetauscher 24 zuzuführen. Die Öffnung 36 wird mit dem Primärkreislauf des Sekundärwärmetauschers 24 verbunden und bildet den Rückfluss für das aus dem Sekundärwärmetauscher austretende Wasser des Primärkreislaufes. Rückseitig ist an dem Gehäuse 30 ein Anschlussstutzen 38 ausgebildet, welcher mit der Saugseite der Pumpe 20 verbunden ist. Ferner ist in dem gezeigten Beispiel eine Füllleitung 40 vorgesehen, welche über Ventile die Brauchwasserleitung zwischen der Öffnung 34 und dem Anschluss DCW mit dem Primär-Heizkreislauf in der Nähe des Anschlusses CHR verbindet.

Die Anschlüsse 14 und 16 für den Wasserspeicher 18 sind nebeneinander liegend in dem Aufnahmegehäuse 30, welches einen Leitungsabschnitt des Primärkreislaufes bildet, angeordnet. Die Anschlüsse 14 und 16 sind als Anschlussstutzen mit Gewinde einstückig mit dem Gehäuse 30 ausgebildet. Wenn kein Wasserspeicher angeschlossen werden soll, können die Anschlüsse 14 und 16 über Stopfen oder Schraubkappen verschlossen werden. Alternativ kann das Gehäuse 30 im Spritzguss so ausgebildet werden, dass in die Öffnungen 14 und 16 kürzere Kerne eingesetzt werden, sodass in den Anschlussstutzen im Bereich der Öffnungen 14 und 16 Gehäusewandungen ausgebildet werden und die Öffnungen 14 und 16 geschlossen sind. So kann ein und dasselbe Werkzug verwendet werden, um eine Baueinheit 2 zur Verwendung mit einem Wasserspeicher 18 und auch eine Baueinheit zur Verwendung ohne Wasserspeicher 18 zu schaffen. Gegebenenfalls können in den Wandungen in den Öffnungen 14 und 16 Sollbruchstellen vorgesehen sein, um diese leicht öffnen zu können, um einen Wasserspeicher 18 anzuschließen.

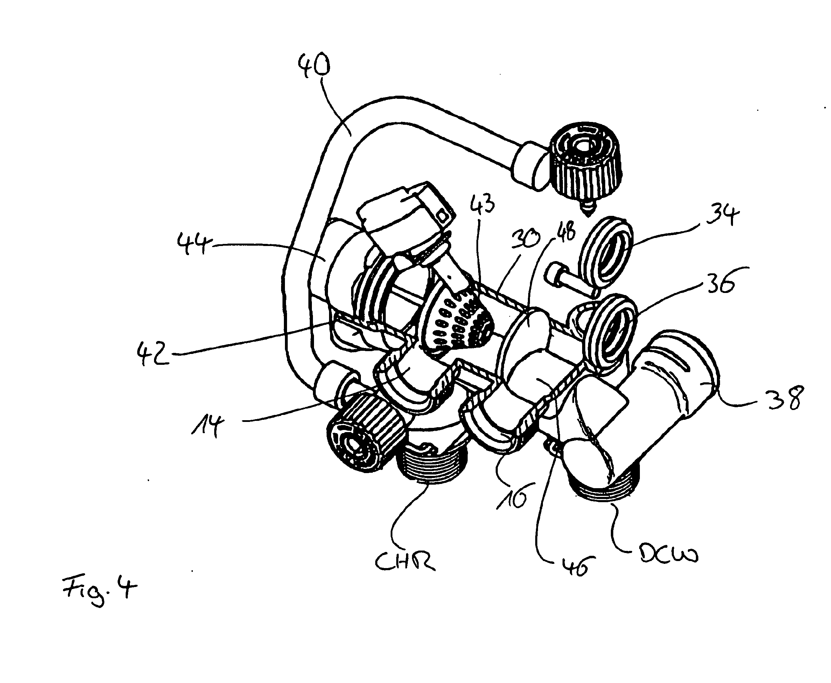

Figur 4 zeigt eine teilweise geschnittene perspektivische Ansicht des in Figur 3 gezeigten Aufnahmegehäuses 30. In das Aufnahmegehäuse 30 ist durch eine an der Vorderseite ausgebildete Öffnung 42 der Schmutzabscheider 43 eingesetzt. Die Öffnung 42 ist an der Vorderseite durch einen Verschluss 44 derart verschlossen, dass die Öffnung 42 zur Entnahme und zum Auswechseln des Schmutzabscheiders 43 geöffnet werden kann. Der Schmutzabscheider 43 ist im Primärkreislauf hinter dem Anschluss CHR angeordnet, sodass das in den Anschluss CHR eintretende Wasser durch den Schmutzabscheider 43 zu dem Anschlussstutzen 38 und weiter zu der Saugseite der Pumpe 20 geleitet wird. Ferner ist durch die Öffnung 42 in das Innere des Aufnahmegehäuses 32 ein Trennelement 46 eingesetzt. Das Trennelement 46 ist als gewinkelte Trennplatte, vorzugsweise aus Metall ausgebildet. Der sich quer zu den Umfangswandungen des Aufnahmegehäuses 30 erstreckende Abschnitt 48 des Trennelements 46 weist an seinem Außenumfang eine Außenkontur korrespondierend zur Innenkontur des Aufnahmegehäuses 30 auf, sodass er dicht an der Innenwandung des Aufnahmegehäuses 30 anliegt. Auch der sich quer zu dem Abschnitt 48 erstreckende Bereich des Trennelementes 46 liegt mit seinen Umfangskanten an den Innenwandungen des Aufnahmegehäuses 30 dichtend an. Auf diese Weise trennt das Trennelement 46 einen Abschnitt am hinteren oberen Ende des Aufnahmegehäuses 30 vom übrigen Volumen des Aufnahmegehäuses 30 ab, sodass im Inneren des Aufnahmegehäuses 30 ein zweiter Strömungskanal zwischen der Öffnung 36 und dem Anschluss 16 gebildet wird, welcher von dem übrigen Bereich des Aufnahmegehäuses 30 getrennt ist. Insbesondere ist der Strömungskanal zwischen der Öffnung 36 und dem Anschluss 16 von dem ersten Strömungsweg zwischen dem Anschluss CHR und dem Anschlussstutzen 38 durch das Trennelement 46 getrennt. Dies ermöglicht, dass das Wasser im Primärkreislauf vom Sekundärwärmetauscher 24 durch die Öffnung 36 zunächst direkt zum Anschluss 16 und über diesen in einen angeschlossenen Wasserspeicher 18 geleitet wird. Aus dem Wasserspeicher 18 tritt das Wasser des Primärkreislaufs durch den Anschluss 14 in den Strömungskanal zwischen Anschluss CHR und Anschlussstutzen 38 ein. Über den Anschlussstutzen 38 wird das Wasser dann wieder der Saugseite der Pumpe 20 zugeführt.

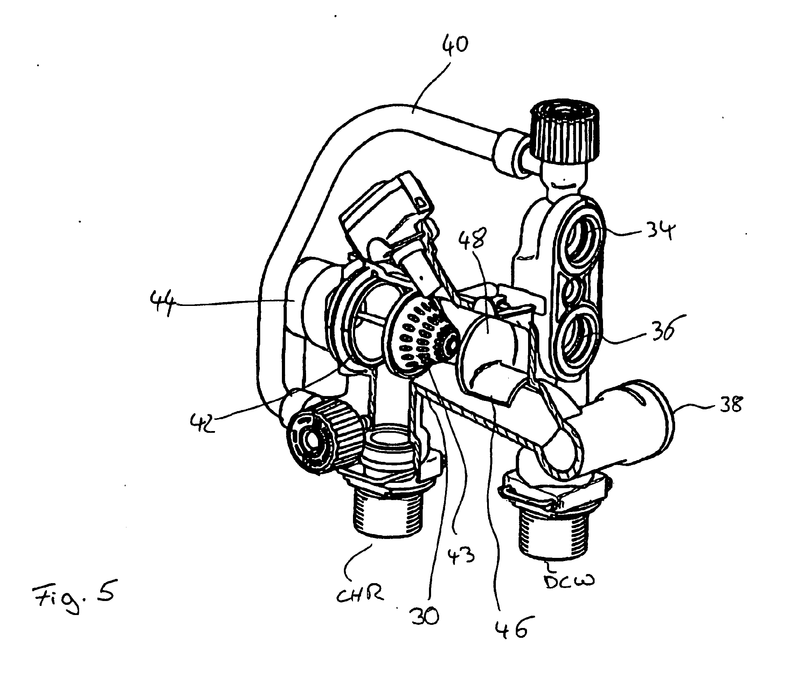

Figur 5 zeigt eine weitere geschnittene Ansicht des Aufnahmegehäuses 30 gemäß Figuren 3 und 4. In Figur 5 ist zu erkennen, wie das Trennelement 46 den Innenraum des Aufnahmegehäuses 30 in zwei Strömungswege teilt, indem es am Innenumfang des Aufnahmegehäuses 30 anliegt. Der Strömungsweg zwischen Anschluss CHR und Anschlussstutzen 38 verläuft im unteren Bereich des Aufnahmegehäuses 30 unterhalb des Trennelementes 46. Das Trennelement 46 ist durch die Öffnung 42 von vorne her in das Aufnahmegehäuse 30 eingesetzt bzw. eingepresst werden, sodass es dichtend an der Innenwandung gehalten wird. Dabei muss keine hundertprozentige Dichtigkeit garantiert werden, da das Trennelement 46 lediglich zwei Teile des Primärkreislaufes im Inneren der Baueinheit 2 voneinander trennt und geringe Leckagen die Funktion nicht beeinträchtigen. Für den Fall, dass an der Baueinheit 2 kein Wasserspeicher 18 angeordnet werden soll, wird auf das Trennelement 46 im Inneren des Aufnahmegehäuses 30 verzichtet. Gleichzeitig werden die Anschlüsse 14 und 16 geschlossen bzw. geschlossen ausgebildet. In diesem Fall sind der Anschluss CHR und die Öffnung 36 über den Innenraum des Aufnahmegehäuses 30 direkt mit dem Anschlussstutzen 38 und damit der Saugseite der Pumpe verbunden. Lediglich das Wasser aus dem Rückfluss des Raumheizungs-Kreislaufes wird durch den Schmutzabscheider 43 geleitet. Das durch die Öffnung 36 aus dem Sekundärwärmetauscher 24 zugeführte Wasser hat lediglich den Kreislauf im Inneren der Baueinheit 2 sowie den Primärwärmetauscher 8 durchflossen, in dem keine Verschmutzung zu erwarten ist, sodass dieses Wasser nicht durch den Schmutzabscheider geleitet wird.

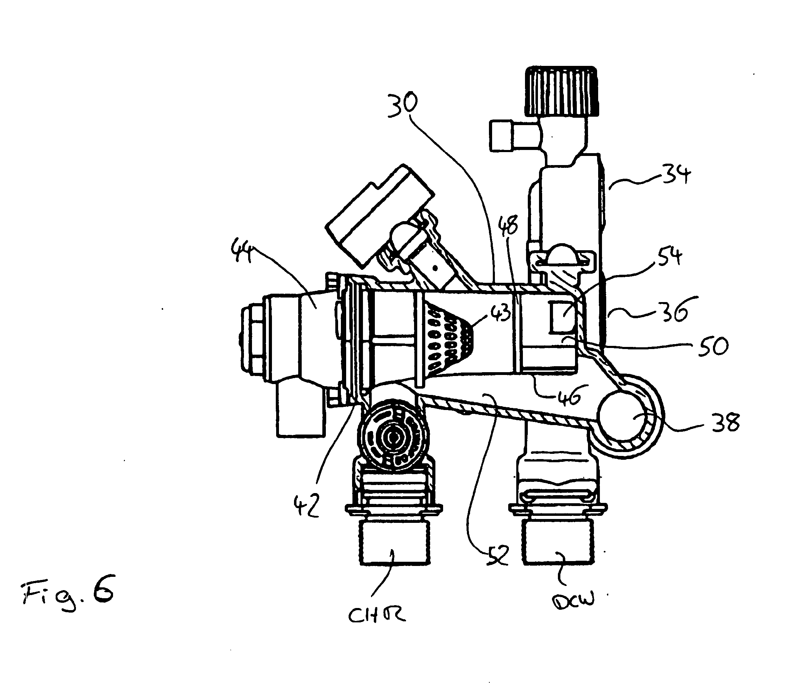

Figur 6 zeigt einen Längsschnitt durch das Aufnahmegehäuse 30 gemäß Figuren 3 bis 5. Auch hier ist das Trennelement 46 eingesetzt, sodass ein in diesem Beispiel oberer Strömungskanal 50 zwischen der Öffnung 36 und dem Anschluss 16 (hier nicht gezeigt), sowie ein unterer Strömungskanal 52 zwischen dem Anschluss CHR und dem Anschlussstutzen 38 gebildet wird. Die Öffnung 36 ist über einen Durchbruch 54 in der Wandung des Aufnahmegehäuses 30 mit dem Strömungskanal 50 bzw. dem Innenraum des Aufnahmegehäuses 30 verbunden. In den Verschluss 44 zum Verschließen der Öffnung 42 des Aufnahmegehäuses 30 ist im gezeigten Beispiel ferner das Überdruckventil der Heizungsanlage integriert.

### Bezugszeichenliste

- 2: Baueinheit
- 4: Anschluss
- 6: Anschluss
- 8: Primärwärmetauscher
- 10: Brenner
- 12: Anschluss für Ausgleichsgefäß
- 14: Anschluss für Wasserspeicher
- 16: Anschluss für Wasserspeicher
- 18: Wasserspeicher
- 20: Pumpe
- 22: 2/3-Wege-Ventil
- 24: Sekundärwärmetauscher
- 26: Strömungssensor
- 28: Stellmotor
- 30: Aufnahmegehäuse
- 32: Klemmenkasten
- 34: Öffnung
- 36: Öffnung
- 38: Anschlussstutzen
- 40: Füllleitung
- 42: Öffnung
- 43: Schmutzabscheider
- 44: Verschluss
- 46: Trennelement
- 48: Abschnitt des Trennelementes
- 50: Strömungskanal
- 52: Strömungskanal
- 54: Durchbruch

## Patentansprüche

1. Baueinheit (2) für eine Kompaktheizungsanlage, insbesondere für eine Gastherme, mit zwei Heizkreisen, einem für die Raumheizung und einem für die Brauchwassererwärmung, wobei die Baueinheit (2) als Spritzgussteil aus Kunststoff ausgebildet ist, einen integrierten Wasserkreislauf bildet und Anschlüsse für den Heizkreis der Raumheizung, Anschlüsse zum Anschluss eines Primärwärmetauschers sowie Anschlüsse für die Brauchwasserzu- und abfuhr, zumindest einen Leitungsabschnitt (30) eines Primärkreislaufes, erforderliche Ventile, zumindest eine Pumpe (20) zur Umwälzung des Primärkreislaufes sowie einen Sekundärwärmetauscher aufweist, **dadurch gekennzeichnet, dass** in dem zumindest einen Leitungsabschnitt (30) des Primärkreislaufes Anschlüsse (14, 16) für einen Wasserspeicher (18) zum Speichern erwärmten Heizungswassers vorgesehen sind.

2. Baueinheit nach Anspruch 1, bei welcher die Anschlüsse (14, 16)für den Wasserspeicher (18) in dem Primärkreislauf in Strömungsrichtung hinter einem Primärwärmetauscher (8) angeordnet sind.

3. Baueinheit nach Anspruch 1 oder 2, bei welcher die Anschlüsse (14, 16) für den Wasserspeicher (18) in dem Primärkreislauf in Strömungsrichtung vor einem Sekundärwärmetauscher (24) zur Erwärmung des Brauchwassers angeordnet sind.

4. Baueinheit nach Anspruch 1, bei welcher die Anschlüsse (14, 16) für den Wasserspeicher (18) in dem Primärkreislauf in Strömungsrichtung hinter einem Sekundärwärmetauscher (24) zur Erwärmung des Brauchwassers angeordnet sind.

5. Baueinheit nach einem der vorangehenden Ansprüche, bei welcher die Anschlüsse (14, 16) für den Wasserspeicher (18) verschließbar oder geschlossen ausgebildet sind.

6. Baueinheit nach einem der vorangehenden Ansprüche, bei welcher die Anschlüsse (14, 16) für den Wasserspeicher (18) in einem zur Aufnahme eines Schmutzabscheiders (43) ausgebildeten Leitungsabschnitt (30) angeordnet sind.

7. Baueinheit nach einem der vorangehenden Ansprüche, bei welcher im Inneren des Leitungsabschnittes (30) zwischen den Anschlossen (14, 16) für den Wasserspeicher (18) ein Sperrelement zum Verschließen des Leitungsabschnittes (30) einsetzbar oder eingesetzt ist.

8. Baueinheit nach Ansprüchen 6 und 7, bei welcher der Leitungsabschnitt (30) eine Öffnung (42) zum Einsetzen des Schmutzabscheiders (43) aufweist und das Sperrelement (46) zum Verschließen des Leitungsabschnittes (30) durch diese Öffnung in den Leitungsabschnitt (30) einsetzbar oder eingesetzt ist.

9. Baueinheit nach Anspruch 7 oder 8, bei welcher Sperrelement (46) als Trennwand, vorzugsweise aus Metall, ausgebildet ist, welche in den Leitungsabschnitt (30) eingepresst ist.

10. Baueinheit nach einem der vorangehenden Ansprüche, bei welcher die Anschlüsse (14, 16) für den Wasserspeicher (18) nebeneinander liegend in dem Leitungsabschnitt (30) angeordnet sind.

11. Baueinheit nach einem der vorangehenden Ansprüche, bei welcher die Anschlüsse (14, 16) für den Wasserspeicher (18) im Primärkreislauf an der Saugseite der Pumpe (20) angeordnet sind.

## Claims

1. A construction unit (2) for a compact heating installation, in particular for a gas heater, with two heating circuits, one for room heating and one for heating service water, wherein
the construction unit (2) is designed as an injection moulded part of plastic, forms an integrated water circuit and comprises connections for the heating circuit of the room heating, connections for the connection of a primary heat exchanger as well as connections for the supply and removal of service water, at least one conduit section (30) of a primary circuit, necessary valves, at least one pump (20) for circulating the primary circuit as well as a secondary heat exchanger, **characterised in that** connections (14, 16) for a water storage device (18) for storing heated heating water are provided in the at least one conduit section (30) of the primary circuit.

2. A construction unit according to claim 1, with which the connections (14, 16) for the water storage device (18) are arranged in the primary circuit in a manner downstream of a primary heat exchanger (8) in the flow direction.

3. A construction unit according to claim 1 or 2, with which the connections (14, 16) for the water storage device (18) are arranged in the primary circuit in a manner upstream of a secondary heat exchanger (24) for heating the service water, in the flow direction.

4. A construction unit according to claim 1, with which the connections (14, 16) for the water storage device (18) are arranged in the primary circuit in a manner downstream of a secondary heat exchanger (24) for heating the service water, in the flow direction.

5. A construction unit according to one of the preceding claims, with which the connections (14, 16) for the water storage device (18) are designed in a closable or closed manner.

6. A construction unit according to one of the preceding claims, with which the connections (14, 16) for the water storage device (18) are arranged in a conduit section (30) designed for receiving a dirt separator (43).

7. A construction unit according to one of the preceding claims, with which a blocking element for the closure of the conduit section (30) may be applied or is applied in the inside of the conduit section (30) between the connections (14, 16) for the water storage device (18).

8. A construction unit according to claim 6 and 7, with which the conduit section (30) comprises an opening (42) for inserting the dirt separator (43), and the blocking element (46) for closing the conduit section (30) may be inserted or is inserted through this opening into the conduit section (30).

9. A construction unit according to claim 7 or 8, with which the blocking element (46) is designed as a separating wall, preferably of metal, which is pressed into the conduit section (30).

10. A construction unit according to one of the preceding claims, with which the connections (14, 16) for the water storage device (18) are arranged lying next to one another in the conduit section (30).

11. A construction unit according to one of the preceding claims, with which the connections (14, 16) for the water storage device (18) are arranged in the primary circuit, on the suction side of the pump (20).

## Revendications

1. Module (2) pour une installation de chauffage compacte, en particulier pour une chaudière à gaz, comprenant deux circuits de chauffage, un circuit pour le chauffage de locaux et un circuit pour le chauffage d'eau sanitaire, dans lequel
le module (2) est réalisé sous forme de pièce moulée par injection en matière plastique, forme un circuit d'eau intégré et présente des raccords pour le circuit de chauffage de locaux, des raccords pour le raccordement d'un échangeur de chaleur primaire, ainsi que des raccords pour l'arrivée et l'évacuation d'eau sanitaire, au moins une portion de conduit (30) d'un circuit primaire, les soupapes nécessaires, au moins une pompe (20) pour la circulation du circuit primaire, ainsi qu'un échangeur de chaleur secondaire, **caractérisé en ce que** sont prévus, dans la portion de conduit (30) au moins au nombre de une du circuit primaire, des raccords (14, 16) pour un réservoir d'eau (18) destiné à accumuler de l'eau de chauffage chauffée.

2. Module selon la revendication 1, dans lequel les raccords (14, 16) du réservoir d'eau (18) sont disposés dans le circuit primaire dans la direction d'écoulement en aval d'un échangeur de chaleur primaire (8).

3. Module selon la revendication 1 ou 2, dans lequel les raccords (14, 16) du réservoir d'eau (18) sont disposés dans le circuit primaire dans la direction d'écoulement en amont d'un échangeur de chaleur secondaire (24) pour le chauffage de l'eau sanitaire.

4. Module selon la revendication 1, dans lequel les raccords (14, 16) du réservoir d'eau (18) sont disposés dans le circuit primaire dans la direction d'écoulement en aval d'un échangeur de chaleur secondaire (24) pour le chauffage de l'eau sanitaire.

5. Module selon l'une des revendications précédentes, dans lequel les raccords (14, 16) du réservoir d'eau (18) sont conçus verrouillables ou fermés.

6. Module selon l'une des revendications précédentes, dans lequel les raccords (14, 16) du réservoir d'eau (18) sont disposés dans une portion de conduit (30) conçue pour recevoir un séparateur d'impuretés (43).

7. Module selon l'une des revendications précédentes, dans lequel est insérable ou inséré à l'intérieur de la portion de conduit (30) entre les raccords (14, 16) du réservoir d'eau (18) un élément d'arrêt pour la fermeture de la portion de conduit (30).

8. Module selon les revendications 6 et 7, dans lequel la portion de conduit (30) présente une ouverture (42) pour l'insertion du séparateur d'impuretés (43) et l'élément d'arrêt (46) pour la fermeture de la portion de conduit (30) est insérable ou inséré à travers cette ouverture dans la portion de conduit (30).

9. Module selon la revendication 7 ou 8, dans lequel l'élément d'arrêt (46) est conçu sous forme d'une paroi de séparation, de préférence en métal, laquelle est enfoncée dans la portion de conduit (30).

10. Module selon l'une des revendications précédentes, dans lequel les raccords (14, 16) du réservoir d'eau (18) sont disposés côte à côte dans la portion de conduit (30).

11. Module selon l'une des revendications précédentes, dans lequel les raccords (14, 16) du réservoir d'eau (18) sont disposés dans le circuit primaire côté aspiration de la pompe (20).
